# EUROPÄISCHE PATENTSCHRIFT

(11) **EP 0 834 102 B1**
(45) Veröffentlichungstag und Bekanntmachung des Hinweises auf die Patenterteilung: **12.06.2002**
(21) Anmeldenummer: 97915348.3
(22) Anmeldetag: 13.03.1997
(51) Int. Cl.: G05B 19/042, G05B 19/05

(54) **STEUERGERÄT, INSBESONDERE KRAFTFAHRZEUGSTEUERGERÄT**
CONTROLLER, IN PARTICULAR MOTOR VEHICLE CONTROLLER
APPAREIL DE COMMANDE, NOTAMMENT APPAREIL DE COMMANDE POUR VEHICULES A MOTEUR

(30) Priorität: 23.04.1996 DE 19616166
(43) Veröffentlichungstag der Anmeldung: 08.04.1998
(73) Patentinhaber: ROBERT BOSCH GMBH, 70442 Stuttgart (DE)
(72) Erfinder: FACKLER, Rupert, D-74385 Pleidelsheim (DE)
(86) Internationale Anmeldenummer: DE9700497
(87) Internationale Veröffentlichungsnummer: WO9740430

(56) Entgegenhaltungen:
- EP-A- 0 155 403
- EP-A- 0 215 633
- EP-A- 0 678 796
- WO-A-91/10201
- DE-A- 4 332 499
- DE-U- 9 112 306
- GB-A- 2 125 578

## Beschreibung

Die vorliegende Erfindung betrifft ein Steuergerät, und zwar insbesondere ein Kraftfahrzeugsteuergerät gemäß dem Oberbegriff des Patentanspruchs 1, d.h. ein Steuergerät,'insbesondere Kraftfahrzeugsteuergerät, mit einer ersten Steuereinheit, einer der ersten Steuereinheit zugeordneten ersten programmierbaren Speichereinrichtung, in der Programme und Daten für die erste Steuereinheit speicherbar sind, und einer ersten Schnittstelle, über welche von einer externen Quelle in das Steuergerät einzuspeichernde Programme und Daten zur ersten Steuereinheit übertragbar sind, wobei die erste Steuereinheit in der Lage ist, die zu ihr übertragenen Programme und Daten zu empfangen und eine Einspeicherung derselben in die erste Speichereinrichtung zu veranlassen.

Ein derartiges Steuergerät ist beispielsweise aus der DE 43 32 499 A1 bekannt.

Der Aufbau des in dieser Druckschrift beschriebenen Steuergerätes ermöglicht es auf einfache Weise, von einer externen Quelle (Programmiergerät in Form eines PC oder dergleichen) bereitgestellte Programme und Daten in eine innerhalb des Steuergeräts vorgesehene programmierbare Speichereinrichtung einzuspeichern, welche einer ersten Steuereinheit (Mikroprozessor, Mikrocontroller und dergleichen) zugeordnet ist und zum Speichern von Programmen und Daten für die erste Steuereinheit dient. Genauer gesagt können sich die für die Programmierung zu treffenden Vorkehrungen - insbesondere wenn als Speichereinrichtung ein sogenanntes Flash-EPROM oder dergleichen verwendet wird - im wesentlichen darauf beschränken, daß die externe Quelle beispielsweise durch eine Schnittstellenleitung (durch ein Schnittstellenkabel) oder dergleichen elektrisch mit dem hierfür vorgesehenen Anschluß am Steuergerät verbunden wird.

Ein derartiger Aufbau ermöglicht daher selbst im bereits eingebauten Zustand des Steuergeräts jederzeit und auf relativ einfache Weise eine erstmalige Programmierung oder Umprogrammierung der Speichereinrichtung.

Komplizierter gestaltet sich die Angelegenheit jedoch, wenn eine oder mehrere weitere Speichereinrichtungen einer oder mehrerer zusätzlicher Steuereinheiten innerhalb des Steuergerätes programmiert werden sollen.

Das Vorsehen mehrerer Steuereinheiten kann unter anderem beispielsweise erforderlich sein, weil die Funktion einer ersten Steuereinheit (Hauptrechner) durch eine zweite Steuereinheit (Zweit- bzw. Sicherheitsrechner) überwacht werden soll.

In entsprechender Anwendung der durch die vorstehend bereits erwähnte DE 43 32 499 A1 offenbarten Lehre könnte in einem solchen Fall für jede Steuereinheit eine für den Anschluß externer Programmiergeräte zugängliche Schnittstelle vorgesehen werden. Dies wiederum würde jedoch ganz offensichtlich sowohl das erstmalige Programmieren des Steuergerätes (z.B. die Programmierung am Bandende in einem Kraftfahrzeug-Herstellungsbetrieb) als auch das spätere Umprogrammieren des Steuergerätes (zur nachträglichen Fehlerbeseitigung oder entsprechend individuellen Kundenwünschen) erheblich verkomplizieren und fehleranfälliger machen.

Die WO 91/10201 zeigt dazu eine Einspeicherung von Daten durch ein Terminal in die Speicher von Kontrolleinheiten. Dabei werden die Daten, die in den Speicher einer Kontrolleinheit eingelesen werden, quasi automatisch über eine Verbindung auch gleichzeitig in die Speicher der anderen Kontrolleinheiten eingelesen. Dazu besitzt jede Kontrolleinheit eine eigene Schnittstelle RS 232. Es ist somit eine parallele Einspeicherung von identischen Daten gezeigt.

Die EP 0 215 633 A zeigt eine elektronische Steueranordnung für eine Maschine mit wenigstens einem Sektionscontroller, einem Maschinencontroller, einem Zentralrechner und einem Eingabeterminal, sowie weiteren dem Sektionscontroller zugeordneten Controllern. Dabei werden Steuersignale der elektronischen Steueranordnung zwischen den einzelnen Controllern der Steueranordnung ausgetauscht. Das Steuerprogramm selbst ist dabei in einem ROM abgelegt. Eine Programmierung derart, dass das Steuerprogramm in verbautem Zustand verteilt in verschiedene, unterschiedlichen Controllern zugeordnete Speicher eingeschrieben wird oder dass, insbesondere funktional, verschiedene Steuereinheiten mit unterschiedlichen Programmen Programmiert werden ist dabei nicht gezeigt.

Die EP 0 678 796 A zeigt eine Zentraleinheit, welche über eine erste Schnittstelle, über einen ersten Bus mit Peripherieeinheiten verbunden ist. Daneben ist ein Programmiergerät gezeigt, welches an einen zweiten Bus angeschlossen ist. Über eine zweite Schnittstelle ist die Zentraleinheit ebenfalls mit dem zweiten Bus verbunden. Durch Schließen eines Schalters sind die Busse direkt verbindbar.

Dadurch kann einerseits die Zentraleinheit programmiert werden und andererseits wird bei Busverbindung über den Schalter vom Programmiergerät direkt auf die Peripherieeinheiten zugegriffen.

Die DE 91 12 306 U schließlich zeigt eine Struktur mit einer ersten Schnittstelle zum Systembus und einer zweiten Schnittstelle, bestehend aus einer Steckerleiste und einem Peripheriemodul zum Ansteuern der peripheren Einheiten. Die Struktur weist CPU-Baugruppen, Zentralgeräte und einem Personalrechner auf. Dabei ist die erste Schnittstelle in einer CPU-Baugruppe enthalten. Zum Informationsaustausch ist die CPU-Baugruppe über die erste Schnittstelle mit dem Systembus verbunden. Die einzelnen CPU-Baugruppen sind somit parallel über den Systembus miteinander verbunden. Dabei sind die Zentralgeräte direkt mit dem Personalrechner verbunden. Eine selektive Programmierung und entsprechende Abspeicherung der Programme in den unterschiedlichen Steuereinheiten zugeordneten Speichern ist nicht gezeigt.

Eine Programmierung ist somit im allgemeinen mit relativem Aufwand bezogen auf die Busanordnung und die Zugänglichkeit der Steuereinheiten verbunden.

Damit zeigt sich, dass der Stand der Technik nicht in jeder Hinsicht optimale Ergebnisse zu liefern vermag.

Der vorliegenden Erfindung liegt daher die Aufgabe zugrunde, ein Steuergerät gemäß dem Oberbegriff des Patentanspruchs 1 derart weiterzubilden, daß die Programmierung von mehreren Steuereinheiten zugeordneten programmierbaren Speichereinrichtungen stets einfach und fehlerunanfällig durchführbar ist.

Diese Aufgabe wird erfindungsgemäß durch die im kennzeichnenden Teil des Patentanspruchs 1 beanspruchten Merkmale gelöst.

Demnach ist eine zweite Schnittstelle vorgesehen, über welche durch die erste Steuereinheit an eine zweite Steuereinheit über die erste Schnittstelle empfangene Programme und Daten weiterleitbar sind, die zur Einspeicherung in eine der zweiten Steuereinheit zugeordnete zweite programmierbare Speichereinrichtung zum Speichern von Programmen und Daten für die zweite Steuereinheit vorgesehen sind.

Damit ist es unabhängig von der Anzahl der im Steuergerät vorgesehenen Steuereinheiten und der Anzahl der denselben zugeordneten Speichereinrichtungen ausreichend, nur eine einzige Schnittstelle für den Anschluß eines externen Programiergerätes oder dergleichen vorzusehen.

Da die erste Steuereinheit in der Lage ist, die ihr über diese Schnittstelle übertragenen Programme und/oder Daten selektiv entweder in die ihr selbst zugeordnete Speichereinrichtung einzuspeichern oder an eine andere Steuereinheit zur Einspeicherung in der dieser zugeordneten Speichereinrichtung weiterzuleiten, können sämtliche Programme und/oder Daten, die in beliebige Speichereinheiten innerhalb des Steuergerätes einzuspeichern sind, über die eine zum Anschluß eines externen Gerätes ausgelegte Schnittstelle zur ersten Steuereinheit übertragen werden.

Die Beschränkung der Anzahl der zum Anschluß eines externen Gerätes ausgelegten Schnittstellen auf eins und deren feste Zuordnung zu einer bestimmten Steuereinheit (erste Steuereinheit) ermöglicht unabhängig von der letztlich angesprochenen oder anzusprechenden Steuereinheit bzw. Speichereinrichtung eine einheitliche Kommunikation zwischen der externen Quelle und dem Steuergerät.

Durch Vorsehen von nur einer einzigen zum Anschluß eines externen Gerätes ausgelegten Schnittstelle ist es darüber hinaus auch ausgeschlossen, daß durch Anschluß eines externen Programmiergerätes an eine falsche Schnittstelle eine Fehlprogrammierung erfolgt.

Das erfindungsgemäße Steuergerät ermöglicht es damit, daß die Programmierung von mehreren Steuereinheiten zugeordneten programmierbaren Speichereinrichtungen stets einfach und fehlerunanfällig durchführbar ist.

Die Möglichkeit, mit verschiedenen Steuereinheiten (auf dem Umweg über die erste Steuereinheit) auf identische Art und Weise zu kommunizieren, erlaubt ferner eine enorme Begrenzung der Hardwarevarianten-Vielfalt.

Das Steuergerät kann aufgrund der geringen Anzahl von externen Anschlüssen darüber hinaus auch relativ klein und handlich gehalten werden.

Vorteilhafte Weiterbildungen der Erfindung sind Gegenstand der Unteransprüche.

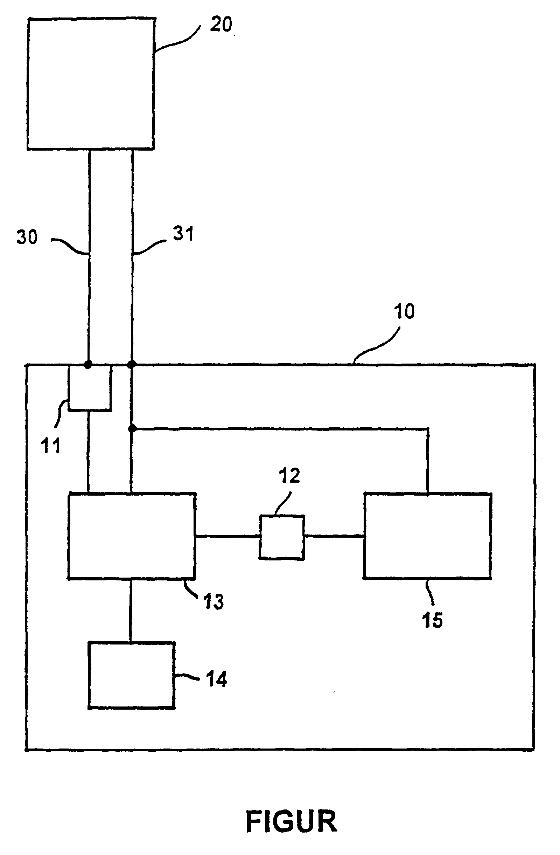

Die Erfindung wird nachfolgend anhand eines Ausführungsbeispiels unter Bezugnahme auf die Zeichnung näher erläutert.

Die Figur zeigt ein Blockschaltbild eines mit einer externen Quelle verbundenen Ausführungsbeispiels des erfindungsgemäßen Steuergerätes.

Das Steuergerät ist in der Figur mit dem Bezugszeichen 10 bezeichnet, und die externe Quelle (zur Programmierung des Steuergerätes 10) ist mit dem Bezugszeichen 20 bezeichnet.

Das Steuergerät 10 dient im vorliegenden Ausführungsbeispiel zur Steuerung des Motors, des Getriebes, der Bremsen etc. eines Kraftfahrzeuges, ist also ein Kraftfahrzeugsteuergerät. Es besteht jedoch keine Einschränkung der Erfindung auf Kraftfahrzeugsteuergeräte; sie ist vielmehr überall dort anwendbar, wo es erforderlich ist, mehreren Steuereinheiten (Mikroprozessoren, Mikrocontroller etc.) eines Steuergerätes zugeordnete Speichereinrichtungen durch eine externe Programmiervorrichtung zu programmieren bzw. umzuprogrammieren.

Das Steuergerät 10 weist unter anderem eine erste Schnittstelle 11, eine zweite Schnittstelle 12, eine erste Steuereinheit 13, eine erste programmierbare Speichereinrichtung 14, und eine zweite Steuereinheit 15 auf.

Die externe Quelle 20 ist beim vorliegenden Ausführungsbeispiel ein Personal Computer (PC). Auch hierauf besteht jedoch keine Einschränkung, es kann sich vielmehr um eine beliebige Vorrichtung handeln, die in der Lage ist, an das Steuergerät 10 zur Einspeicherung in Speichereinrichtungen derselben vorgesehene Programme (genauer gesagt Programmcodes) und/oder Daten zu übertragen und somit die Funktion einer Programmierstation zu übernehmen.

Das Steuergerät 10 ist zur Programmierung desselben mit der externen Quelle 20 über eine Schnittstellenleitung 30 verbunden, das eine nicht gezeigte serielle Schnittstelle (beispielsweise vom Typ RS 232) und einen gegebenenfalls vorgesehenen Pegelwandler der externen Quelle 20 mit der ersten (seriellen) Schnittstelle 11 des Steuergerätes 10 verbindet und der bidirektionalen Übertragung von Code-, Daten- und Steuersignalen zwischen dem Steuergerät 10 und der externen Quelle 20 dient. Die Schnittstellenleitung 30 kann beispielsweise als eine sogenannte K-Leitung ausgebildet sein, welche international normiert (ISO-Norm) ist und insbesondere im Automobilbau sehr häufig (fast ausschließlich) eingesetzt wird.

Das Steuergerät 10 und die externe Quelle 20 sind darüber hinaus mit einer Programmierspannungsleitung 31 verbunden, über welche von der externen Quelle 20 eine später noch genauer erläuterte Programmierspannung zum Steuergerät 10 übertragen wird.

Die erste Schnittstelle 11 des Steuergerätes 10 ist mit der ersten Steuereinheit 13 verbunden; sie kann auch abweichend von der Darstellung in der Figur in der ersten Steuereinheit 13 integriert sein. Die erste Steuereinheit 13 ist im vorliegenden Ausführungsbeispiel ein Mikrocomputer, ein Mikrocontroller oder dergleichen, kann aber auch durch andere steuernde Einheiten realisiert werden.

Die erste Steuereinheit 13 ist mit der ersten programmierbaren Speichereinrichtung 14 verbunden; die Speichereinrichtung 14 kann auch abweichend von der Darstellung in der Figur in der ersten Steuereinheit 13 integriert sein. In der der ersten Steuereinheit 13 zugeordneten Speichereinrichtung 14 sind Programme und/oder Daten für die erste Steuereinheit 13 speicherbar. Die erste Speichereinrichtung 14 ist im vorliegenden Fall in Form eines löschbaren nichtflüchtigen Speichers wie beispielsweise eines sogenannten Flash-EPROM realisiert. Die Verwendung eines Flash-EPROM erweist sich hier als besonders vorteilhaft, weil es die Vorzüge eines "normalen" EPROM (hohe Speicherzellendichte auf engem Raum) und eines EEPROM (elektrisches und damit einfaches und bequemes Löschen des Speicherinhalts) auf sich vereint.

Die erste Steuereinheit 13 ist ferner über die zweite (seriellen) Schnittstelle 12 mit der zweiten Steuereinheit 15 verbunden; die Verbindung zwischen der ersten Steuereinheit 13 und der zweiten Steuereinheit 15 kann zwar, wird mangels Wirkung nach außen in der Regel aber nicht als K-Leitung ausgebildet sein. Die zweite Schnittstelle 12 kann abweichend von der Darstellung in der Figur auch in der ersten und/oder zweiten Steuereinheit integriert sein. Die Verbindung der ersten Steuereinheit 13 und der zweiten Steuereinheit 15 über die besagte zweite Schnittstelle 12 dient der bidirektionalen Übertragung von Code-, Daten- und Steuersignalen zwischen der ersten Steuereinheit 13 und der zweiten Steuereinheit 15.

Die zweite Steuereinheit 15 ist wie schon die erste Steuereinheit 13 ein Mikrocomputer, Mikrocontroller oder dergleichen. Der zweiten Steuereinheit ist eine zweite programmierbare Speichereinrichtung zugeordnet, in welcher Programme und/oder Daten für die zweite Speichereinheit gespeichert sind. Diese Speichereinrichtung ist im vorliegenden Ausführungsbeispiel in der zweiten Steuereinheit integriert.

Die in der Figur nicht gezeigte, der zweiten Steuereinheit 15 zugeordnete zweite Speichereinrichtung ist im betrachteten Ausführungsbeispiel eine einmal programmierbare, dann aber nicht mehr löschbare nichtflüchtige Speichereinrichtung wie beispielsweise ein OTPROM (one time programmable ROM). Alternativ oder zusätzlich kann die zweite Speichereinrichtung auch eine löschbare nichtflüchtige Speichereinrichtung wie beispielsweise ein Flash-EPROM, ein EEPROM oder dergleichen umfassen. Die der zweiten Steuereinheit 15 zugeordnete zweite Speichereinrichtung kann unabhängig von deren Ausführung eine innerhalb oder außerhalb der zweiten Steuereinheit 15 vorgesehene Speichereinrichtung sein.

Die zweite Steuereinheit 15 stellt im vorliegenden Ausführungsbeispiel einen Sicherheitsrechner dar, welcher die Funktion der ersten Steuereinheit 13 überwacht. Die Funktion der zweiten Steuereinheit 15 ist jedoch nicht hierauf beschränkt. Es kann sich vielmehr um eine zu beliebigen Zwecken eingesetzte Steuereinheit (mit zugeordneter einmal oder mehrmals programmierbarer, in der Steuereinheit integrierter oder separater, d.h. externer Speichereinrichtung) handeln; gleiches gilt im übrigen auch für die erste Steuereinheit.

Die Programmierung der im Steuergerät vorgesehenen programmierbaren Speichereinrichtungen durch die externe Quelle funktioniert wie folgt:

Von der externen Quelle 20 wird über die Programmierspannungsleitung 31 eine Programmierspannung an das Steuergerät angelegt. Diese Programmierspannung wird innerhalb des Steuergerätes an die Steuereinheiten und/oder die zugeordneten Speichereinrichtungen weitergeleitet und ermöglicht (gegebenenfalls in Abhängigkeit vom momentanen Betriebszustand des Systems), daß die jeweiligen Einheiten auf entsprechende Kommandos bzw. eine entsprechende Ansteuerung hin in einen eine Speicherprogrammierung bzw. eine Speicherumprogrammierung erlaubenden Bereitschaftszustand versetzt werden.

Die in das Steuergerät neu einzuspeichernden Programme und/oder Daten werden dem Steuergerät 10 von der externen Quelle 20 über die Schnittstellenleitung 30 zugeführt. Die zugeführten Programme und/oder Daten gelangen über die erste Schnittstelle 11 zur ersten Steuereinheit 13 und werden von dieser aufgenommen. Die empfangenen Daten werden vorzugsweise (aber nicht unbedingt) in einem in der Figur nicht gezeigten Arbeitsspeicher in Form eines RAM oder dergleichen zwischengespeichert.

Die empfangenen Daten und/oder diesen zugeordnete und mit übertragene Steuerinformationen (Kommandos, Statusinformationen etc.) werden von der ersten Steuereinheit 13 daraufhin untersucht, in welche der Speichereinrichtungen des Steuergerätes die empfangenen Programme und/oder Daten einzuspeichern sind.

Wird durch die erste Steuereinheit 13 dabei festgestellt, daß die empfangenen Programme und/oder Daten zur Einspeicherung (Einprogrammierung) in die der ersten Steuereinheit 13 zugeordnete erste programmierbare Speichereinrichtung 14 bestimmt sind, veranlaßt die erste Steuereinheit 13 (gegebenenfalls nach vorhergehendem Löschen der entsprechenden Speichereinrichtungsbereiche) die Übertragung und Einspeicherung der dazu vorgesehenen Programme und/oder Daten in die erste Speichereinrichtung 14. Die zu diesem Zweck zu treffenden Maßnahmen sind bekannt und bedürfen daher keiner weiteren Erläuterung.

Wird durch die erste Steuereinheit 13 festgestellt, daß die empfangenen Programme und/oder Daten nicht zur Einspeicherung in die ihr zugeordnete erste Speichereinrichtung bestimmt sind bzw. zur Einspeicherung (Einprogrammierung) in die der zweiten (oder einer weiteren) Steuereinheit zugeordnete zweite (oder weitere) programmierbare Speichereinrichtung bestimmt sind, veranlaßt die erste Steuereinheit 13 die Übertragung der davon betroffenen, zuvor von ihr empfangenen Programme und/oder Daten zu der zweiten (oder weiteren) Steuereinheit, damit sie dort in eine zugeordnete Speichereinrichtung eingespeichert oder gegebenenfalls abermals weitervermittelt werden.

Die Kommunikation zwischen den betroffenen Steuereinheiten erfolgt dabei jeweils über zwischen diesen vorgesehene (serielle) Schnittstellen (zweite Schnittstelle 12 im Fall der Übertragung von der ersten Steuereinheit 13 zur zweiten Steuereinheit 15).

Sofern die von der ersten Steuereinheit 13 von der externen Quelle empfangenen Daten in einer Reihenfolge, Codierung etc. vorliegen, die eine Weiterleitung und/oder Weiterverarbeitung der Programme und/oder Daten nicht ermöglichen oder wenigstens behindern, kann in der ersten Steuereinheit 13 eine Umsetzungsroutine vorgesehen werden, durch welche die zu anderen Steuereinheiten weiterzuleitenden Programme und/oder Daten in eine eine Weiterleitung und/oder Weiterverarbeitung gestattende Form bringbar sind. Derartige Routinen müssen jedoch nicht zwangsläufig in der die Verbindung zur externen Quelle 20 ermöglichenden ersten Steuereinheit vorgesehen sein; sie können (zumindest teilweise) auch in den durch die erste Steuereinheit adressierten Steuereinheiten vorgesehen sein. Das Vorsehen derartiger Umsetzungsroutinen ermöglicht es, daß die Programme, Daten und Steuerinformationen zwischen der ersten Steuereinheit und der externen Quelle unabhängig von deren Ziel und späterer Verwendung stets auf die selbe Weise und in der selben Form ausgetauscht werden können.

Die von der ersten Steuereinheit 13 weitergeleiteten Programme und/oder Daten werden von der adressierten Steuereinheit empfangen und (gegebenenfalls wiederum unter Zwischenspeicherung derselben) zur Einspeicherung an die betreffende Speichereinrichtung weitergeleitet. Die zu diesem Zweck zu treffenden Maßnahmen sind wieder allgemein bekannt und bedürfen keiner weiteren Erläuterung.

Die adressierte Steuereinheit informiert die sendende Steuereinheit darüber, ob das Einspeichern der empfangenen Programme und/oder Daten in die zugeordnete Speichereinrichtung oder die Weiterleitung derselben an eine weitere Steuereinheit erfolgreich durchgeführt wurden.

Die erste Steuereinheit 13 informiert die externe Quelle darüber, ob das Einspeichern der empfangenen Programme und/oder Daten in die vorgesehene Speichereinrichtung erfolgreich durchgeführt wurde.

Beim beschriebenen Ausführungsbeispiel sind nur zwei Steuereinheiten 13, 15 vorgesehen. Die Erfindung ist hierauf jedoch nicht beschränkt. Es können vielmehr beliebig viele Steuereinheiten und denselben zugeordnete programmierbare Speichereinrichtungen vorgesehen werden.

Die Vielzahl der Steuereinheiten kann dabei auch beliebig verschaltet sein, d.h. sie können parallel zueinander und/oder hierarchisch in mehreren Ebenen vorgesehen sein. Sofern einer Steuereinheit eine programmierbare Speichereinrichtung zugeordnet ist, ist sie jedoch vorzugsweise mit einer Schnittstelle verbunden, über welche sie von einer weiteren Steuereinheit in die Speichereinrichtung einzuspeichernde Programme und/oder Daten empfangen kann; nur die erste (oder jedenfalls nur einige wenige ausgewählte) Steuereinheiten sind mit Schnittstellen verbunden, über welche Programme und/oder Daten unmittelbar von einer externen Quelle empfangen werden können.

Der Zeitpunkt, zu dem von einer beliebigen Steuereinheit empfangene Daten zur Einspeicherung an die zugeordnete Speichereinrichtung oder an eine weitere Steuereinheit weitergeleitet werden, muß nicht unmittelbar auf den Empfang der Programme und/oder Daten folgen. Es wird hierbei vorzugsweise auf einen Zeitpunkt gewartet, zu dem weder die sendende Einheit noch die empfangende Einheit mit anderen (wichtigeren) Aufgaben beschäftigt sind. Um eine Störung des laufenden Betriebs des Steuergerätes durch eine Programmierung oder Umprogrammierung völlig auszuschließen, kann vorgesehen werden, die Weiterleitung von empfangenen Programmen und/oder Daten an eine zugeordnete Speichereinrichtung und/oder an eine weitere Steuereinheit erst nach dem Ausschalten des Steuergerätes (in einem entsprechend lang dimensionierten Nachlauf desselben) vorzunehmen.

Die Steuereinheit 10 und die externe Quelle 20 können, falls dies erforderlich sein sollte, in der Figur nicht gezeigte Pegelwandler aufweisen, um die Pegel der jeweils gesendeten und/oder empfangenen Signale individuell (hardwarespezifisch) umsetzen zu können.

Die vorstehende Beschreibung der Abläufe bei der Programmierung bzw. Umprogrammierung des Steuergerätes bezog sich in erster Linie darauf, wie neu in die jeweiligen Speichereinrichtungen einzuspeichernde Programme und/oder Daten behandelt werden. Daneben ist es jedoch, wenngleich dies nicht immer explizit erwähnt ist, auch erforderlich, entsprechende Steuerinformationen (Statusinformationen, Kommandos etc.) zwischen den jeweils beteiligten Komponenten auszutauschen. Diese Steuerinformationen sind ebenfalls über die jeweiligen Schnittstellen austauschbar, wobei die hierfür erforderlichen - unter Umständen speziell zu treffenden - Vorkehrungen dem Fachmann auch ohne ausführliche Beschreibung an dieser Stelle geläufig sein dürften.

Das Vorsehen von nur einer (oder gegebenenfalls einiger weniger) Schnittstellen, die eine Verbindung mit externen Geräten ermöglichen und das vermehrte Vorsehen von Schnittstellen, die eine Verbindung zwischen den einzelnen Steuereinheiten innerhalb des Steuergerätes ermöglichen, ist nicht nur bei der beschriebenen Programmierung des Steuergerätes nutzbringend einsetzbar. Es erweist sich gleichermaßen auch in Fällen als vorteilhaft, in denen "nur" Kommandos, Statusinformationen und dergleichen ausgetauscht werden (beispielsweise beim Löschen von Speicherinhalten, beim Testen des Steuergerätes durch ein Testgerät etc.). Auch in solchen Fällen führt die Beschränkung der Anzahl der Schnittstellen, die für den Anschluß externer Geräte ausgelegt sind, zu einer einfacheren und fehlerunanfälligeren Handhabung des Steuergerätes.

## Patentansprüche

1. Steuergerät, insbesondere Kraftfahrzeugsteuergerät, mit einer ersten Steuereinheit (13), einer der ersten Steuereinheit zugeordneten ersten programmierbaren Speichereinrichtung (14), in der Programme und Daten für die erste Steuereinheit speicherbar sind, und einer ersten Schnittstelle (11), über welche von einer externen Quelle (20) in das Steuergerät (10) einzuspeichernde Programme und Daten zur ersten Steuereinheit übertragbar sind, wobei die erste Steuereinheit in der Lage ist, die zu ihr übertragenen Programme und Daten zu empfangen und eine Einspeicherung derselben in die erste Speichereinrichtung zu veranlassen, **gekennzeichnet durch** eine zweite Schnittstelle (12), über welche **durch** die erste Steuereinheit an eine zweite Steuereinheit (15) über die erste Schnittstelle empfangene Programme und Daten weiterleitbar sind, die zur Einspeicherung in eine der zweiten Steuereinheit zugeordnete zweite programmierbare Speichereinrichtung zum Speichern von Programmen und Daten für die zweite Steuereinheit vorgesehen sind, wobei die erste Steuereinheit (13) derart ausgebildet ist, daß sie von der externen Quelle (20) empfangene, zur Einspeicherung in eine der Speichereinrichtungen des Steuergerätes (10) vorgesehene Programme und Daten über die zweite Schnittstelle (12) an die zweite Steuereinheit weiterleitet, wenn die Programme und Daten nicht zur Einspeicherung in die erste Speichereinrichtung (14) oder zur Einspeicherung in die zweite Speichereinrichtung vorgesehen sind.

2. Steuergerät nach Anspruch 1, **dadurch gekennzeichnet, daß** die zweite Steuereinheit (15) derart ausgebildet ist, daß sie zu ihr übertragenen Programme und Daten empfängt und, falls sie zur Einspeicherung in die zweite Speichereinrichtung vorgesehen sind, eine Einspeicherung derselben in die zweite Speichereinrichtung veranlaßt.

3. Steuergerät nach Anspruch 2, **dadurch gekennzeichnet, daß** die zweite Steuereinheit (15) derart ausgebildet ist, daß sie die erste Steuereinheit (13) darüber informiert, ob der Versuch, die empfangenen Programme und Daten in die zweite Speichereinrichtung einzuspeichern, erfolgreich durchgeführt werden konnte.

4. Steuergerät nach einem der vorhergehenden Ansprüche, **dadurch gekennzeichnet, daß** die erste Steuereinheit (13) derart ausgebildet ist, daß sie die externe Quelle (20) darüber informiert, ob der Versuch, die empfangenen Programme und Daten in die erste oder zweite Speichereinrichtung einzuspeichern, erfolgreich durchgeführt werden konnte.

5. Steuergerät nach einem der vorhergehenden Ansprüche, **dadurch gekennzeichnet, daß** die externe Quelle (20) und das Steuergerät (10) durch eine Programmierspannungsleitung (31) verbunden sind, über welche die externe Quelle an das Steuergerät eine Programmierspannung anlegen kann, durch welche das Steuergerät in eine eine Programmierung aller oder ausgewählter Speichereinrichtungen gestattende Programmierbetriebsart bringbar ist.

6. Steuergerät nach einem der vorhergehenden Ansprüche, **dadurch gekennzeichnet, daß** die Steuereinheiten derart ausgebildet sind, daß empfangene Programme und Daten in jeweiligen Speichereinrichtungen zwischengespeichert und erst zu einem späteren Zeitpunkt in die zugeordnete Speichereinrichtung eingespeichert oder an eine weitere Steuereinheit weitergeleitet werden.

7. Steuergerät nach Anspruch 6, **dadurch gekennzeichnet, daß** die Steuereinheiten derart ausgebildet sind, daß empfangene Programme und Daten erst nach dem Ausschalten des Steuergerätes in die zugeordnete Speichereinrichtung eingespeichert werden.

## Claims

1. Controller, in particular motor vehicle controller, having a first control unit (13), a first programmable memory device (14), which is assigned to the first control unit and in which programs and data for the first control unit can be stored, and a first interface (11), via which programs and data to be stored in the controller (10) can be transmitted from an external source (20) to the first control unit, the first control unit being able to receive the programs and data transmitted to it and to initiate storage thereof in the first memory device, **characterized by** a second interface (12), via which the first control unit can forward to a second control unit (15) programs and data that have been received via the first interface and are provided for storage in a second programmable memory device - assigned to the second control unit - for storing programs and data for the second control unit, the first control unit (13) being designed in such a way that it forwards programs and data that have been received from the external source (20), and are provided for storage in one of the memory devices of the controller (10), to the second control unit via the second interface (12) if the programs and data are not provided for storage in the first memory device (14) or are provided for storage in the second memory device.

2. Controller according to Claim 1, **characterized in that** the second control unit (15) is designed in such a way that it receives programs and data transmitted to it and, if they are provided for storage in the second memory device, initiates storage thereof in the second memory device.

3. Controller according to Claim 2, **characterized in that** the second control unit (15) is designed in such a way that it informs the first control unit (13) of whether the attempt to store the received programs and data in the second memory device was able to be carried out successfully.

4. Controller according to one of the preceding claims, **characterized in that** the first control unit (13) is designed in such a way that it informs the external source (20) of whether the attempt to store the received programs and data in the first or second memory device was able to be carried out successfully.

5. Controller according to one of the preceding claims, **characterized in that** the external source (20) and the controller (10) are connected by a programming voltage line (31), via which the external source can apply to the controller a programming voltage which can bring the controller into a programming operating mode which allows programming of all or selected memory devices.

6. Controller according to one of the preceding claims, **characterized in that** the control units are designed in such a way that received programs and data are buffer-stored in respective memory devices and only at a later point in time are they stored in the assigned memory device or forwarded to a further control unit.

7. Controller according to Claim 6, **characterized in that** the control units are designed in such a way that received programs and data are stored in the assigned memory device only after the controller has been switched off.

## Revendications

1. Appareil de commande, notamment pour un véhicule automobile, comportant une première unité de commande (13), une première installation de mémoire (14) programmable associée à la première unité de commande et qui enregistre les programmes et les données de la première unité de commande, ainsi qu'une première interface (11) permettant à partir d'une source externe (20) de transmettre à l'appareil de commande (10) les programmes et les données à enregistrer dans la première unité de commande, la première unité de commande étant en mesure de recevoir les programmes et données transmis et de les enregistrer dans la première installation de mémoire,
**caractérisé par**
une seconde interface (12) permettant à la première unité de commande de retransmettre à une seconde unité de commande (15) des programmes et données reçus à travers la première interface, et destinés à être enregistrés dans une seconde installation de mémoire programmable associée à la seconde unité de commande, pour enregistrer les programmes et les données destinés à cette seconde unité de commande, la première unité de commande (13) étant réalisée pour retransmettre les programmes et données reçus de la source externe (20) et destinés à être enregistrés dans l'une des installations de mémoire de l'appareil de commande (10), par la seconde interface (12) à la seconde unité de commande, si les programmes et les données ne sont pas destinés à être enregistrés dans la première installation de mémoire (14) ou s'ils sont destinés à être enregistrés dans la seconde installation de mémoire.

2. Appareil de commande d'un véhicule automobile selon la revendication 1,
**caractérisé en ce que**
la seconde unité de commande (15) est réalisée pour recevoir les données et programmes qui lui sont transmis et dans le cas où ils sont destinés à être enregistrés dans la seconde installation de mémoire, il commande l'enregistrement des données et programmes dans cette seconde installation de mémoire.

3. Appareil de commande d'un véhicule automobile selon la revendication 1,
**caractérisé en ce que**
la seconde unité de commande (15) est réalisée pour informer la première unité de commande (13) que la tentative d'enregistrer les programmes et données reçus dans la seconde installation de mémoire a été exécutée avec succès.

4. Appareil de commande d'un véhicule automobile selon l'une des revendications précédentes,
**caractérisé en ce que**
la première unité de commande (13) est réalisée pour informer la source externe (20) que la tentative d'enregistrer les programmes et données reçus dans la première ou la seconde installation de mémoire a été exécutée avec succès.

5. Appareil de commande d'un véhicule automobile selon l'une des revendications précédentes,
**caractérisé en ce que**
la source externe (20) et l'appareil de commande (10) sont reliés par une ligne de tension de programmation (31) par laquelle la source externe transmet à l'appareil de commande une tension de programmation qui met l'appareil de commande dans un mode de programmation permettant la programmation de toutes les installations de mémoire ou d'installations sélectionnées.

6. Appareil de commande d'un véhicule automobile selon l'une des revendications précédentes,
**caractérisé en ce que**
les unités de commande sont réalisées pour enregistrer de manière intermédiaire les programmes et données dans les installations de mémoire respectives et de ne les retransmettre qu'à un moment ultérieur à l'installation de mémoire correspondante ou à une autre unité de commande.

7. Appareil de commande d'un véhicule automobile selon la revendication 6,
**caractérisé en ce que**
les unités de commande sont réalisées pour enregistrer les programmes et données reçus dans l'installation de mémoire associée seulement après la coupure de l'appareil de commande.
